Europäisches Patentamt

European Patent Office

Office européen des brevets

(19)

(11) Veröffentlichungsnummer : **0 155 994**
**B1**

(12) # EUROPÄISCHE PATENTSCHRIFT

(45) Veröffentlichungstag der Patentschrift :
09.09.87

(21) Anmeldenummer : 84112442.3

(22) Anmeldetag : 16.10.84

(51) Int. Cl.⁴ : **B 01 J   7/00, B 64 G   1/48**

(54) **Gaserzeugungsanlage, insbesondere für Orbitalstationen und Satelliten.**

(30) Priorität : 09.03.84 DE 3408592

(43) Veröffentlichungstag der Anmeldung :
02.10.85 Patentblatt 85/40

(45) Bekanntmachung des Hinweises auf die Patenterteilung : 09.09.87 Patentblatt 87/37

(84) Benannte Vertragsstaaten :
FR IT NL

(56) Entgegenhaltungen :
DD-A-   62 307
FR-A- 1 375 030
US-A- 3 442 711

(73) Patentinhaber : ERNO Raumfahrttechnik Gesellschaft mit beschränkter Haftung
Hünefeldstrasse 1-5
D-2800 Bremen (DE)

(72) Erfinder : Erdmann, Hermann
Theodor-Storm-Strasse 7
D-2803 Weyhe (DE)
Erfinder : Rahm, Heiko
Mundsburger Damm 63
D-2000 Hamburg (DE)

EP 0 155 994 B1

## Beschreibung

Die Erfindung betrifft eine Gaserzeugungsanlage, insbesondere für Orbitalstationen und Satelliten, bei der auf der Bassis der chemischen Reaktion und/oder katalytischen Zersetzung eines vorzugsweise flüssigen Energieträgers Gase erzeugt werden und das so erzeugte Gasgemisch mittels einer nachgeschalteten Trenneinrichtung in seine Komponenten zerlegt wird.

Für bemannte und unbemannte Orbitalstationen sowie größere Satelliten wird in zunehmendem Maße der Einsatz regenerativer Prozesse angestrebt, um, insbesondere im Hinblick auf immer längere Missionsdauern, Gewicht und Platz an Verbrauchsstoffen einzusparen. Dies gilt auch für die Versorgung mit Stickstoff- und Wasserstoffgas bei derartigen Raumflugkörpern. Der Stickstoff findet dabei unter anderem Verwendung als Atemluftbeimischung im Wohn- und Arbeitsbereich der Astronauten, als Inertgas für wissenschaftliche Experimente sowie in Kaltgas-Lageregelungstriebwerken. Für den letztgenannten Verwendungszweck wird häufig auch Wasserstoff eingesetzt, der bei einer Verwendung als kaltgas einen bedeutend höheren spezifischen Impuls aufweist als Stickstoff. Darüber hinaus findet Wasserstoff Verwendung in Brennstoffzellen und ebenfalls bei wissenschaftlichen Experimenten im Weltraum. Es ist deshalb bereits vorgeschlagen worden, für diese Einsatzgebiete sogenannte Inertgas-Generatoren vorzusehen, die aus einem Hydrazintank, einem Gaserzeuger sowie einer Wasserstoffdiffusions- und -trenneinrichtung bestehen. Ferner sind bereits Wasserstoff-Permeationsanlagen bekannt, die zur Herstellung von Reinstwasserstoff sowie zur Trennung von Wasserstoff aus Wasserstoff-Stickstoffgemischen dienen. Diese letztgenannten Geräte arbeiten mit Vakuumsystemen sowie mit elektrischer Heizung.

Aufgabe der Erfindung ist es, eine Gaserzeugungsanlage der eingangs genannten Art so auszubilden, daß sie unter Wahrung der für Raumfahrtsysteme erforderlichen hohen Funktionssicherheit eine für derartige Systeme geeignete kompakte Bauweise aufweist und zugleich über eine möglichst große zeitliche Trenn- und Abgaberate der gewünschten Gaskomponenten verfügt. Darüber hinaus soll diese Anlage möglichst vielseitig einsetzbar sein.

Zur Lösung dieser Aufgabe sind bei der Erfindung die im kennzeichnenden Teil des Anspruchs 1 angegebenen Gestaltungsmerkmale vorgesehen. In den Unteransprüchen sind ferner vorteilhafte Weiterbildungen, vor allem im Hinblick auf eine noch weitergehende Erhöhung der Gastrennrate pro Gewichts- und Volumeneinheit des Systems sowie eine weitgehend autonome Betriebsweise der erfindungsgemäßen Anordnung angegebe. Das Einsatzgebiet der Gaserzeugungsanlage gemäß der Erfindung ist dabei nicht ausschließlich auf den Bereich der Raumfahrttechnik beschränkt, wenngleich die Anlage für diesen Einsatzzweck in besonderem Maße geeignet ist.

Nachfolgend soll die Erfindung anhand von in der Zeichnung dargestellten Ausführungsbeispielen näher erläutert werden. Es zeigen :

Figur 1 eine Gaserzeugungsanlage gemäß der Erfindung in Schnittdarstellung,

Figur 2 einen vergrößerten Ausschnitt aus Fig. 1,

Figur 3 eine Detaildarstellung des in Fig. 2 gekennzeichneten Bereiches,

Figur 4 einen weiteren vergrößerten Ausschnitt aus Fig. 1,

Figur 5 in schematischer Darstellung ein weitgehend autonomes Gaserzeugungssystem mit einer Anordnung gemäß Fig. 1,

Figur 6 eine synchron-optische Darstellung des Prozeßablaufs in einer Anordung gemäß Fig. 1 und

Figur 7 ein Beispiel für die Zusammenfassung mehrerer Anordnungen gemäß Fig. 1 zu einem modular aufgebauten Gasversorgungssystem.

In den Figuren sind gleiche bzw. einander entsprechende Bauteile mit den gleichen Bezugsziffern versehen.

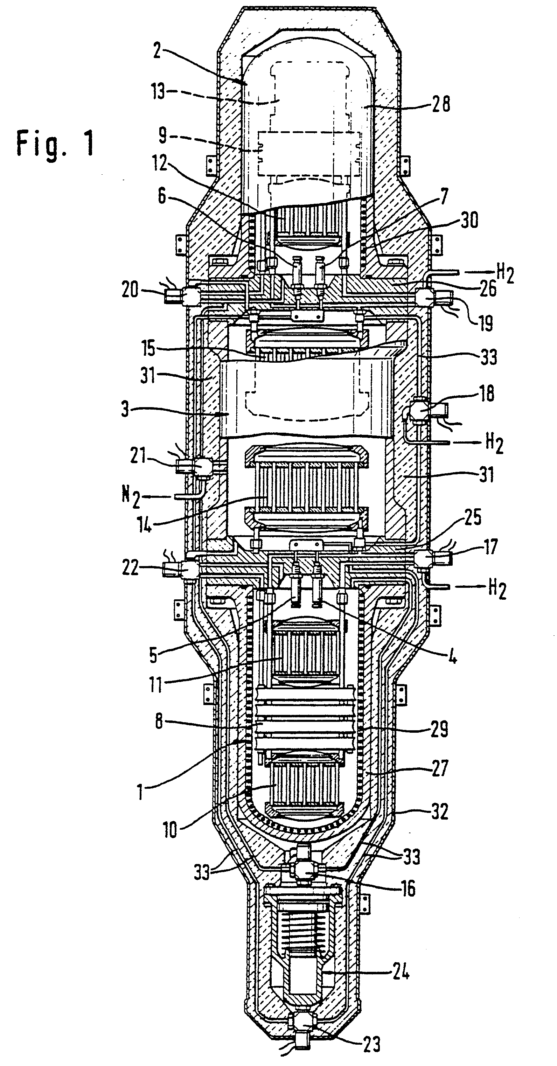

Bei der in Fig. 1 dargestellten Gaserzeugungsanlage handelt es sich um ein modulares System zur Erzeugung und Trennung von Stickstoff- und Wasserstoffgas aus Hydrazin. Das System besteht zunächst aus zwei getrennten Prozeßkammern 1 und 2, die einander gegenüberliegend angeordnet sind und die über eine dritte Kammer 3 miteinander verbunden sind. Die beiden Prozeßkammern 1 und 2 umfassen dabei jeweils einen oder mehrere, im Falle des hier dargestellten Ausführungsbeispiels je zwei Gaserzeuger 4 und 5 bzw. 6 und 7, je einen Nachkatalysator 8 bzw. 9 sowie jeweils zwei Wasserstoff-Trenneinheiten 10 und 11 bzw. 12 und 13. Der Aufbau dieser Komponenten wird im folgenden noch näher erläutert werden. Den Prozeßkammern ist ferner jeweils eine weitere Wasserstoffgas-Trenneinheit 14 bzw. 15 zugeordnet, die im Innern der dritten Kammer 3 untergebracht ist.

Weiterhin umfaßt die Anordnung eine Reihe von magnetisch betätigten Ventilen 16 bis 23, die der Gasführung und der Prozeßsteuerung dienen und auf deren Funktion im einzelnen noch eingegangen wird. Außerdem gehört zu der hier beschriebenen Anordnung eine Zuführeinheit 24, über die die Gaserzeuger 4 bis 7 mit dem Energieträger versorgt werden.

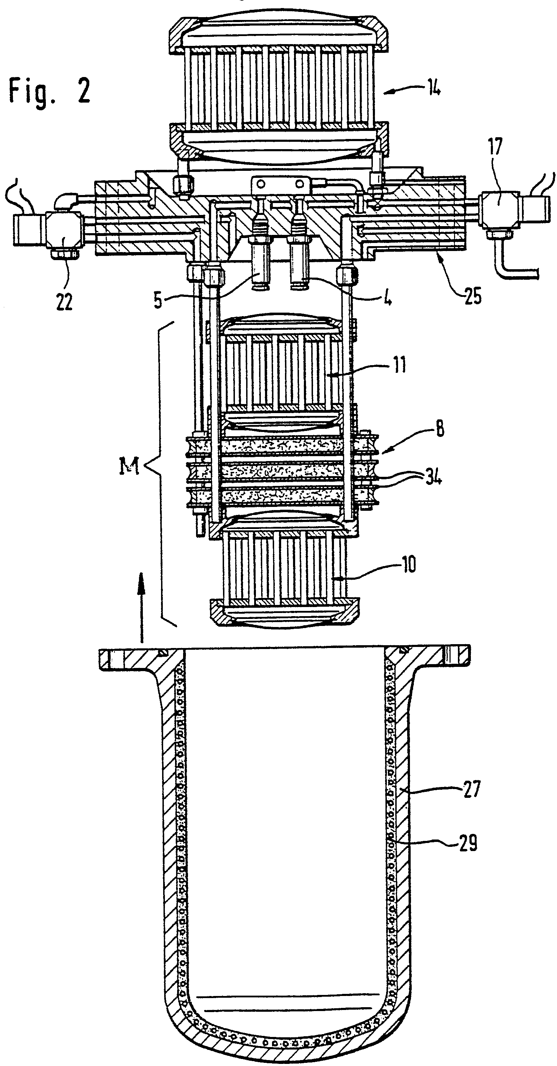

Wie auch aus Fig. 2 ersichtlich ist, sind jeweils ein Großteil der Systemkomponenten, nämlich die Gaserzeuger 4 und 5, die aus den zwei Trenneinheiten 10 und 11 sowie dem Nachkatalysator 8 bestehende Montagegruppem, die weitere Trenneinheit 14 und schließlich die beiden Ventile 17 und 22 auf einem gemeinsamen Flansch 25 angebracht. Auf dem Flansch 26 sind dem in analoger Weise die Gaserzeuger 6 und 7, die Trenneinheiten 12, 13 und 15, der Nachkatalysator 9 sowie die Ventile 19 und 20 montiert. Wie die Figuren 1 und 2 ferner zeigen, sind die beiden Prozeßkammern 1 und 2 von je einer Haube 27 bzw. 28 umschlossen, in denen jeweils ein ringförmiges elektrisches Heizelement 29 bzw. 30 angeordnet ist.

Die Hauben 27 und 28, die Kammer 3 sowie die Zylindereinheit 24 sind in einen nahezu vollständig geschlossenen Mantel 31 aus Isoliermaterial eingebettet, der seinerseits von einer Metallhülle 32 umgeben ist. Der Isoliermantel 31 nimmt dabei sowohl die restlichen, nicht an den Flanschen 25 bzw. 26 angeordneten Ventile als auch den größten Teil der Verbindungsleitungen 33 zwischen den einzelnen Prozeßräumen auf.

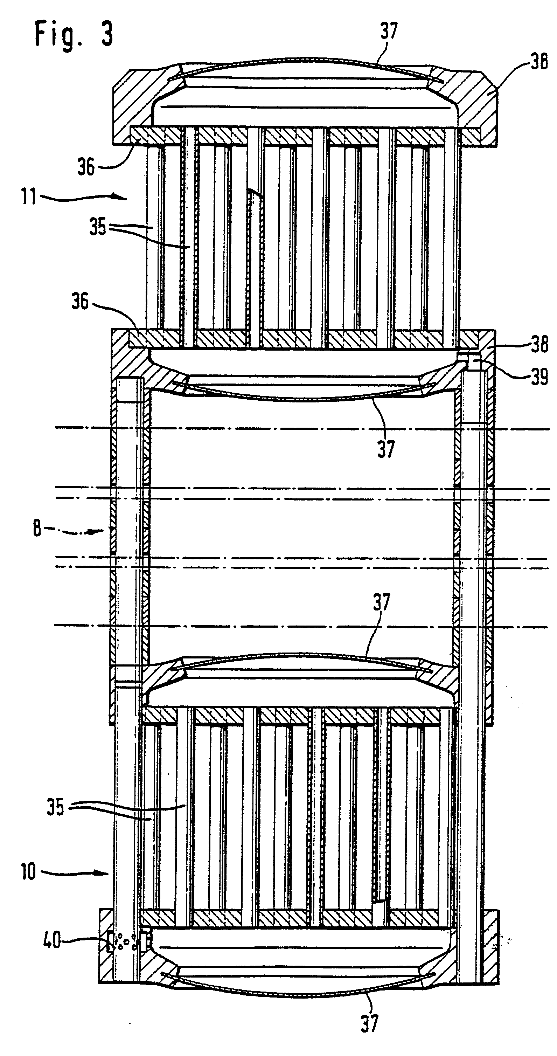

Fig. 3 zeigt im Detail die Anordnung der beiden Trenneinheiten 10 bzw. 11, die dem Nachkatalysator 8 vor- bzw. nachgeschaltet sind und zusammen mit diesem eine Montageeinheit bilden. Es ist aber auch möglich, auf das Nachkatalysatorsystem zu verzichten, weil die aus Palladium bestehenden Trenneinheiten diese Funktion gegebenenfalls hinreichend erfüllen. Der übersichtlicheren Darstellung wegen ist in dieser Figur der bereits in Fig. 2 gezeigte Aufbau des Nachkatalysators fortgelassen, der sich aus mehreren Scheiben 34 zusammensetzt, die ihrerseits jeweils aus zwischen kreisförmigen Lochplatten gehaltenem Siebgewebe bestehen. Die Trenneinheiten 10 und 11 und, in analoger Weise auch die Trenneinheiten 12 und 13, werden jeweils von einer Anzahl von Trennrohren 35 aus Palladium gebildet, die durch kreisförmige Lochplatten 36 zu zylindrischen Einheiten zusammengefaßt werden. Endseitig werden diese Einheiten von nach außen gewölbten Trennmembranen 37, ebenfalls aus Palladium, verschlossen, die in ringförmigen Halteringen 38 eingebettet sind. In dieser Figur sind ferner die beiden Entnahmepunkte 39 und 40 für das sich unterhalb der Trennmembranen sammelnde Wasserstoffgas zu erkennen. Wie die Figuren 1 und 2 darüber hinaus zeigen, entspricht auch der Aufbau der beiden Trenneinheiten 14 und 15 im wesentlichen dem vorstehend beschriebenen ; infolge einer jeweils größeren Anzahl von Trennrohren ist lediglich ihr Durchmesser größer als derjenige der Trenneinheiten 10 bis 13.

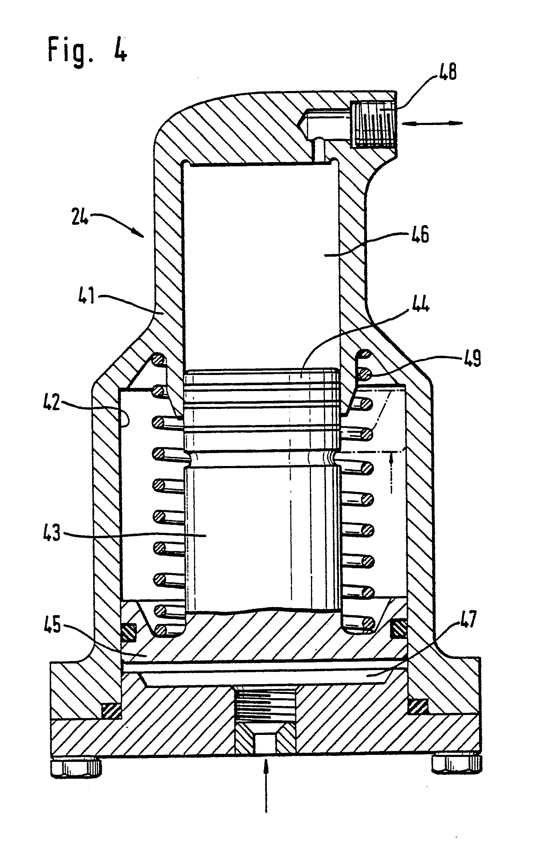

Fig. 4 zeigt im Detail den Aufbau der Zuführeinheit 24 für den Energieträger, im vorliegenden Fall für das Hydrazin. In einer im Innern eines Gehäuses 41 befindlichen Ausnehmung 42 ist ein Stempel 43 längsverschieblich angeordnet. Letzterer trägt an seinem einen Ende einen Kolben 44 und am gegenüber liegenden Ende einen zweiten Kolben 45, dessen Durchmesser größer als derjenige des Kolbens 44 ist. Beide Kolben bewegen sich in entsprechenden Kolbenräumen 46 bzw. 47, von denen der zum kleineren Kolben 44 gehörige Kolbenraum 46 über ein Kugelventil 48 mit dem hier nicht gezeigten Vorratsbehälter für den Energieträger verbunden ist. Außerdem ist dieser Kolbenraum 46 über das Magnetventil 23 und einen Zweig des Leitungssystems 33 mit den Gaserzeugern 4 bis 7 verbunden. Der Kolbenraum 47 ist vermittels des Magnetventils 16 und eines anderen Zweiges des Leitungssystems 33 mit Prozeßgas beaufschlagbar. Schließlich weist die Zuführeinheit 24 eine Spiralfeder 49 auf, die den Stempel 43 umgibt und auf den Kolben 45 wirkt.

Die Wirkungsweise der in Fig. 4 gezeigten Anordnung ergibt sich unmittelbar aus der Zeichnung :

Wenn das Kolbensystem 44, 45, d. h. der Stempel 43, durch die Feder 49 in den Kolbenraum 47 gedrückt wird, wird zugleich Hydrazin in den Kolbenraum 46 gesaugt. Durch anschließende Beaufschlagung des Kolbens 45 mit Prozeßgas wird das Kolbensystem in den Kolbenraum 46 gepreßt und das Hydrazin, bei nunmehr geschlossenem Ventil 48 und geöffnetem Ventil 23, in das Leitungssystem und damit zu den Gaserzeugern 4 und 5 bzw. 6 und 7 gedrückt, wo es katalytisch zersetzt wird und die zugehörige Prozeßkammer mit Gas füllt. Anzumerken ist noch, daß in Fig. 4 die in Fig. 1 dargestellten Ventile 16 und 23 zur Vereinfachung der Darstellung fortgelassen wurden.

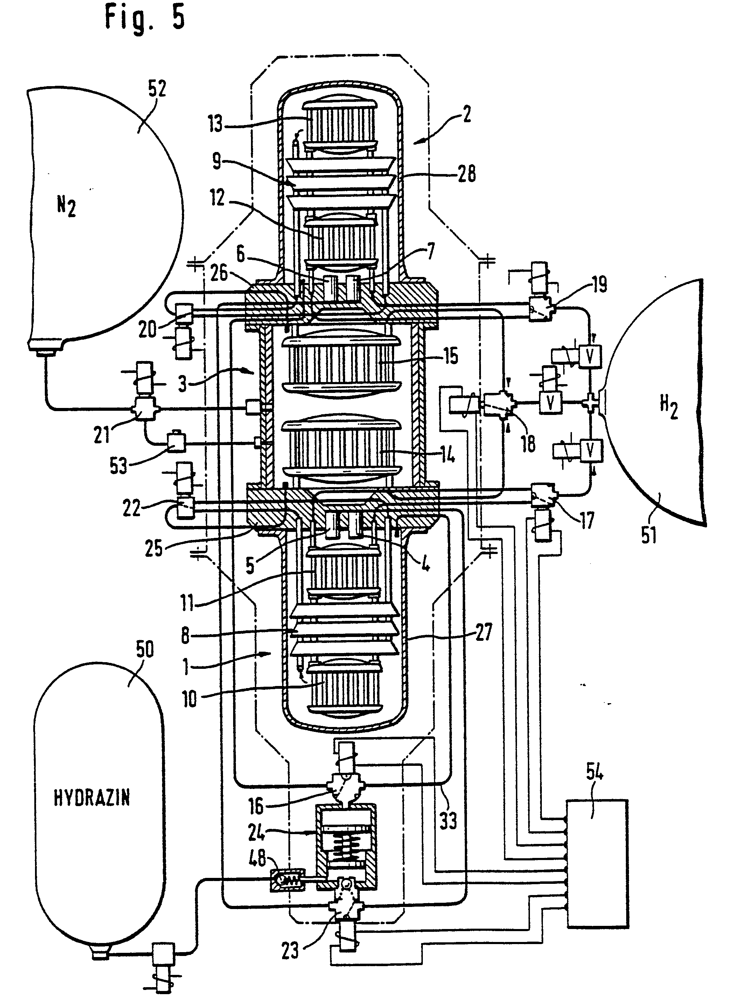

Fig. 5 zeigt in schematischer Darstellung den Aufbau eines weitgehend autonomen Gasversorgungssystems für Stickstoff- und Wasserstoffgas, das im wesentlichen auf der anhand der Fig. 1 bis 4 beschriebenen Gaserzeugungsanlage basiert. Diese Anordnung ist mit ihren wichtigsten Komponenten in der Mitte der Fig. 5 dargestellt. Zusätzlich sind in dieser Fig. ein Vorratsbehälter 50 für den Energieträger, d. h. das Hydrazin, sowie je ein Sammeltank 51 und 52 für das erzeugte Wasserstoff- und Stickstoffgas dargestellt. Hinzu kommt schließlich ein Prozeßrechner 54 zur Steuerung des Systems. Anhand der in Fig. 5 gezeigten Anordnung soll nunmehr die Funktionsweise der erfindungsgemäßen Gaserzeugungsanlage beschrieben werden. Das System kann dabei, bis auf die erforderlichen elektronischen Schaltimpulse für den Prozeßrechner, weitgehend autonom, d. h. von der Zufuhr von Fremdenergie unabhängig, ausgelegt werden. Eine im Hinblick auf die Maximierung der erzielbaren Stickstoff- und Wasserstoffgastrennraten optimale Prozeßführung ergibt sich dabei, wenn die beiden Prozeßkammern 1 und 2 im angenäherten zeitlichen Gegentakt arbeiten, wodurch die anfallende Prozeßenergie jeweils einer Kammer zur Erzielung der erforderlichen Pumpleistungen bzw. zum Gastransport ausgenutzt werden kann. Diese Betriebsweise soll hier erläutert werden.

Wie bereits anhand von Fig. 4 beschrieben, wird mittels der Zuführeinheit 24 kurzzeitig Hydrazin in die Gaserzeuger 4, 5 bzw. 6, 7 gefördert. Zur Initialisierung des Gesamtsystems kann hierbei zunächst ein Startimpuls, beispielsweise die Beaufschlagung mit einem Druckgas, benutzt werden. Das Magnetventil 23, über das das Hydrazin aus dem Kolbenraum 46 der Zuführeinheit 24 austritt, ist als Umschaltventil ausgebildet, so daß jeweils die Gaserzeuger nur einer der beiden Prozeßkammern beschickt werden. Das durch katalytische Zersetzung des Hydrazins erzeugte Stickstoff-/Wasserstoffgasgemisch gelangt in die zugehörige Prozeßkammer, in diesem Fall sei es zunächst die Prozeßkammer 1. In dieser Prozeßkammer erfolgt mittels der beiden Trenneinheiten 10 und 11 bereits eine teilweise Trennung des Wasserstoffs aus dem Stickstoff-/Wasserstoffgemisch. Der ebenfalls in Prozeßkammer 1 enthaltene Nachkatalysator 8 sorgt zugleich dafür, daß etwaig noch im Gasgemisch enthaltene $N_2H_4$-Restteile weiter in die Komponenten Stickstoff und Wasserstoff zerlegt werden. Im Anschluß an diesen Prozeßzyklus gelangt das, nunmehr einen bereits höheren Stickstoffanteil als das Ausgangsgemisch aufweisende, Gasgemisch über das Umschaltventil 22 die als Zwischensammler fungierende dritte Kammer 3. Die Entnahme aus der Prozeßkammer 1 erfolgt dabei sowohl vor als auch hinter dem Nachkatalysator 8, wobei dieser Wechseltakt (prozessorgesteuert) einen ständigen Gaswechsel über den Nachkatalysator erzeugt und dabei den weiteren Rest $N_2H_4$-Zerfall in der Prozeßkammer wesentlich beschleunigt. Die im Zwischensammler 3 angeordneten Trenneinheiten 14 und 15 sorgen anschließend für die vollständige Separation des noch verbliebenen Wasserstoffs aus dem Prozeßgemisch. Das abgetrennte Wasserstoffgas sammelt sich sowohl in den Vor-Trenneinheiten 10 bzw. 11 als auch in den Nach-Trenneinheiten 14 bzw. 15 jeweils unterhalb der Palladium-Membranen und wird über die Umschaltventile 17 und 18 dem Wasserstoffgassammeltank 51 zugeführt. Das im Zwischensammler 3 verbleibende Stickstoffgas wird über das Ventil 21 in den Stickstoffgassammeltank 52 abgeleitet.

Während in der ersten Prozeßkammer 1 der Zersetzungs- und Trennprozeß noch andauert, etwa nach Ablauf der halben Prozeßdauer, werden die Gaserzeuger der zweiten Prozeßkammer 2 ebenfalls kurzzeitig mit Hydrazin beaufschlagt, und es wird in dieser Kammer der entsprechende Prozeßablauf in Gang gesetzt. Hierbei dient das Umschaltventil 19 zur Entnahme des Wasserstoffgases an den Trenneinheiten 12 bzw. 13 und das Ventil 20 zur anschließenden Überführung des mit Stickstoff angereicherten Prozeßgases in den Zwischensammler 3, ebenfalls wieder im Wechseltakt vor und hinter dem Nachkatalysator.

Durch die Überlappung der Betriebszeiten in den beiden Prozeßkammern läßt sich dabei der Betriebsdruck jeweils einer Kammer, d. h. das Prozeßgas, zur Bereitstellung der erforderlichen Pumpleistungen einsetzen. Somit ist keine extreme, z. B. elektrische Pumpleistung erforderlich. Durch den Wechselbetrieb beider Kammern ist dabei zugleich die Rückführung des entnommenen Prozeßgases in den Gaskreislauf ohne Gasverluste möglich.

Indem die Überführung des bereits mit Stickstoff angereicherten Prozeßgases aus einer der beiden Prozeßkammern in den Zwischensammler jeweils alternierend vor und hinter dem Nachkatalysator erfolgt, wird zugleich durch die damit erzwungene Gasbewegung die vollständige katalytische Zersetzung der noch vorhandenen $N_2H_4$-Anteile begünstigt.

Ferner kann durch eine — programmgesteuerte — alternierende Taktschaltung der Entnahmeventile 17 und 19 für die Ableitung des separierten Wasserstoffgases aus den jeweiligen Trenneinheiten in den entsprechenden Sammeltank ständig für eine hinreichende Gasbewegung an den separierenden Palladiumoberflächen gesorgt werden, die eine wesentliche Voraussetzung für eine gründliche Abtrennung der Komponenten aus dem Prozeßgasgemisch sind. Das gleiche gilt für die getaktete Betätigung des Ventils 18, das die Entnahme an den beiden Nach-Trenneinheiten 14 und 15 kontrolliert. Nach Beendigung der Prozeßdauer in der ersten Prozeßkammer 1 und dem Beginn der Überführung des mit Stickstoff angereicherten Prozeßgases in den Zwischensammler tritt für diese Kammer zunächst eine Pause ein, bevor sie, bei Abschluß des Prozesses in der zweiten Prozeßkammer 2, erneut mit hydrazin beschickt wird, während zugleich für die Kammer 2 der Entnahmezyklus, d. h. die Überführung des Prozeßgases in den Zwischensammler beginnt.

Die Ableitung des Wasserstoffgases aus den Prozeßkammern sowie dem Zwischensammler in den Sammeltank 51 kann während der gesamten Prozeßdauer erfolgen. Da zunächst während der Dauer einer halben Prozeßperiode Gas aus der ersten Prozeßkammer in den Zwischensammler strömt, anschließend ebenso lange aus der zweiten Prozeßkammer und dann eine Pause von ebenfalls gleicher Dauer eintritt, ist innerhalb des gesamten Prozeßablaufs eine hinreichende Verweildauer im Zwischensammler sichergestellt, ohne daß der Gegendruck in diesem zu hoch ansteigen würde und damit die Wasserstoffgasentnahme aus den beiden Prozeßkammern beeinflussen könnte.

Die Entnahme des Stickstoffgases aus dem Zwischensammler über das Ventil 21 kann entweder für eine gewisse Zeit am Ende der Verweildauer des Prozeßgases im Zwischensammler erfolgen oder aber durch das Signal eines im Zwischensammler installierten Druckwächters 53, sobald ein vorgegebener Druckschwellwert überschritten ist, initialisiert werden.

Je nach der für die vollständige Trennung des Gasgemisches erforderlichen Dauer kann bei sonst gleicher Zykluszeit die Verweildauer des Gases im Zwischensammler verlängert werden. Die Länge dieser Verweildauer kann beispielsweise mittels eines für Wassertoff empfindlichen Sensors im Zwischensammler gesteuert werden, der die Wasserstoffabreicherung in diesem Raum registriert und bei einem vorgegebenen Schwellwert einen entsprechenden Schaltimpuls an das Ventil 21 für die Stickstoffentnahme liefert.

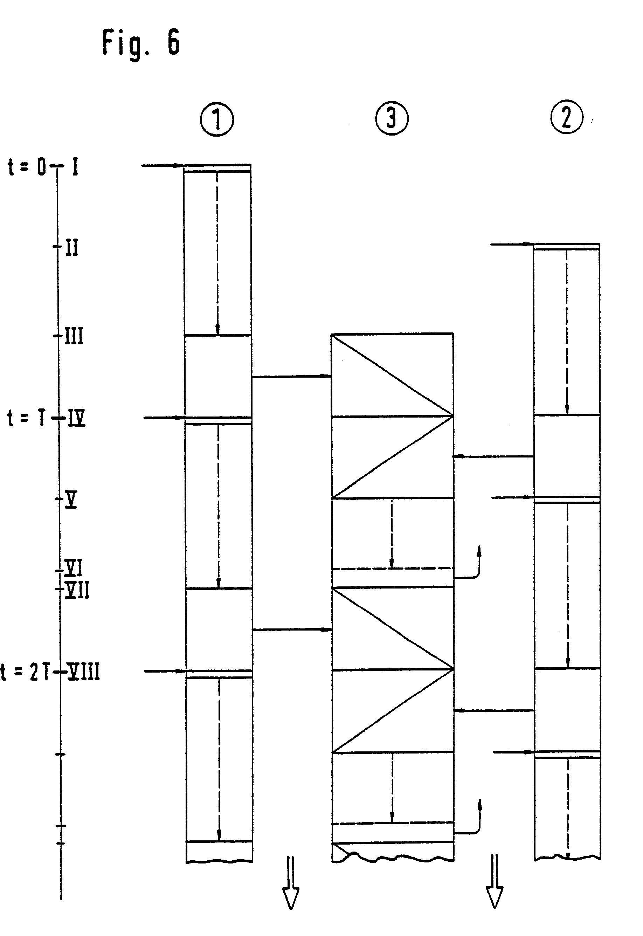

In Fig. 6 ist der vorstehend geschilderte Betriebszyklus der erfindungsgemäßen Anordnung zur Verdeutlichung noch einmal in synchronoptischer Darstellung wiedergegeben. Am linken Bildrand ist die Zeitachse aufgetragen, auf der der Prozeßbeginn (t = 0), die Periodendauer T zwischen zwei Beschickungen einer Prozeßkammer mit Hydrazin sowie verschiedene Prozeßstadien I bis VIII markiert sind. Punkt I markiert dabei den Prozeßstart, gegebenenfalls initiiert durch Beaufschlagung der Zuführeinheit 24 mit Druck (20 bar) von außen, bei dem die Prozeßkammer 1 mit Hydrazin beschickt wird. Punkt II markiert den gleichen Vorgang für die Prozeßkammer 2, etwa nach der halben Betriebsdauer der Prozeßkammer 1 bzw. bei T/3. Bei Punkt III, etwa bei 2/3 T, beginnt die Entnahmezeit für Kammer 1, d. h. die Zeit, in der das bereits mit Stickstoff angereicherte Prozeßgas in den Zwischensammler 3 überführt wird. Bei Punkt IV beginnt dieser Vorgang bei der Prozeßkammer 3, zugleich werden die Gaserzeuger der Prozeßkammer 1 erneut mit Hydrazin beschickt, während bei Punkt V auch die Prozeßkammer 2 wieder mit Hydrazin versorgt wird.

Die Zeit zwischen den Punkten V und VII markiert die Verweildauer des Prozeßgases im Zwischensammler 3, bestimmt durch die zur vollständigen Trennung der beiden Gaskomponenten erforderliche Zeit. Zum Zeitpunkt VI beginnt dabei die Entnahme von Stickstoffgas aus dem Zwischensammler, die bis zum Punkt VII andauert. Die Entnahme des Wasserstoffs aus den einzelnen Entnahmestellen kann demgegenüber in der geschilderten Weise während des gesamten Prozeßablaufs erfolgen. Punkt VIII markiert schließlich den Ablauf der zweiten Betriebsperiode (t = 2T) für die Prozeßkammer 1.

Wie diese Darstellung zeigt, sind bei der vorstehend geschilderten Betriebsart der erfindungsgemäßen Anordnung die einzelnen Zykluszeiten, Verweildauern und Entnahmezeiten so gewählt, daß sich teilweise Überlappungen ergeben. Diese Art des Gegentaktbetriebes stellt indes nur einen im Hinblick auf die Gaserzeugungsraten und eine möglichst große Dauergaserzeugung optmierten Betriebsmodus dar. Es sind ohne weiteres auch andere Betriebsarten möglich.

Wie die vorstehende Beschreibung des Prozeßablaufs weiter erkennen läßt, wird durch die Auslegung der erfindungsgemäßen Anordnung als Zweikammersystem nicht nur eine sehr kompakte Bauweise eines derartigen Gaserzeugungssystems ermöglicht, sondern es wird zugleich eine verbesserte Systemredundanz erzielt.

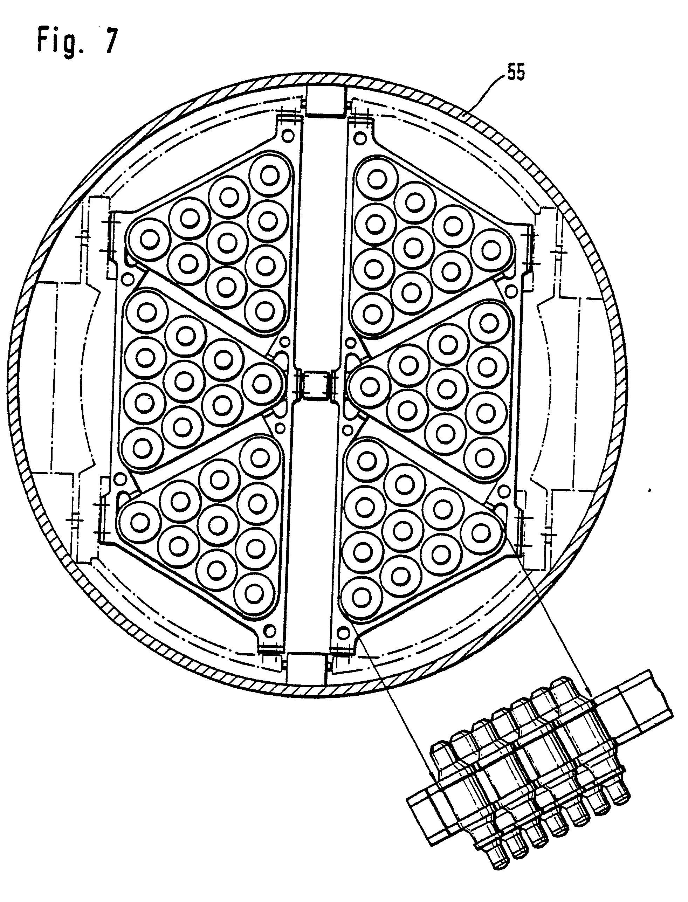

Wie schließlich Fig. 7 zeigt, können die Gaserzeugungsanlagen nach der Erfindung aufgrund ihres modulartigen Aufbaus zu größeren Modul-Clustern zusammengefaßt werden. So ist in Fig. 7 eine Anordnung gezeigt, bei der insgesamt 60 Gaserzeugungsanlagen der in Fig. 1 dargestellten Art, zusammengefaßt in sechs Dreiecks-Clustern zu je 10 Anlagen, in der zylindrischen Struktur 55 einer Orbitalstation untergebracht sind.

Abschließend sei erwähnt, daß die integrierte Anordnung eines Großteils der Komponenten auf den beiden Flanschen 25 und 26 nicht nur eine rasche Demontage und damit einen Austausch dieser Komponenten ermöglicht, sondern daß, beispielsweise für Testzwecke, durch das einfache Einfügen von Zwischenringen zwischen einem Flansch und der zugehörigen Haube bzw. zwischen einem Flansch und dem Zwischensammler eine beliebige Vergrößerung der einzelnen Kammern erfolgen kann. Ferner ist es auf besonders einfache Weise möglich, jeweils einen Teil der Komponenten einem Funktionstest zu unterziehen, um die Anordnung dann schrittweise zu vervollständigen.

**Patentansprüche**

1. Gaserzeugungsanlage, insbesondere für Orbitalstationen und Satelliten, bei der auf der Basis der chemischen Reaktion und/oder katalytischen Zersetzungen eines vorzugsweise flüssigen Energieträgers Gase erzeugt werden und das so erzeugte Gasgemisch mittels einer Trenneinrichtung in seine Komponenten zerlegt wird, dadurch gekennzeichnet, daß wenigstens zwei mit jeweils mindestens je einem Gaserzeuger (4-7) und einer Trenneinheit (10-15) versehene Prozeßkammern (1, 2) über eine dritte Kammer (3) zu einer modularen, ansteuerbaren Prozeßeinheit zusammengefaßt sind.

2. Gaserzeugungsanlage nach Anspruch 1, dadurch gekennzeichnet, daß jede der Prozeßkammern (1, 2) zusätzlich einen Nachkatalysator (8, 9) enthält.

3. Gaserzeugungsanlage nach Anspruch 2, dadurch gekennzeichnet, daß jedem Nachkatalysator (8, 9) je eine Trenneinheit (10, 11, 12, 13) vor- und nachgeschaltet ist.

4. Gaserzeugungsanlage nach einem der Ansprüche 1 bis 3, dadurch gekennzeichnet, daß in der dritten, als Zwischensammler dienenden Kammer (3) wenigstens eine weitere Trenneinheit (14, 15) angeordnet ist.

5. Gaserzeugungsanlage nach einem der Ansprüche 1 bis 4, dadurch gekennzeichnet, daß die Prozeßkammern (1, 2) sowie die dritte Kammer (3) über ansteuerbare Ventile (17-21) mit Sammelbehältern (51, 52) zur Aufnahme der einzelnen Gaskomponenten verbunden sind.

6. Gaserzeugungsanlage nach einem der Ansprüche 1 bis 5, dadurch gekennzeichnet, daß die den Prozeßkammern (1, 2) zugeordneten Gaserzeuger (4-7) über eine gemeinsame Zuführeinheit (24) mit dem Energieträger beaufschlagbar sind.

7. Gaserzeugungsanlage nach einem der Ansprüche 1 bis 6, dadurch gekennzeichnet, daß die Prozeßkammern (1, 2) jeweils einen Flansch (25, 26) aufweisen, der die Gaserzeuger (4-7) sowie einen Teil der Ventile (17, 19, 20, 22) aufnimmt und der zugleich auch als Träger für die Trenneinrichtung (10, 11, 14 bzw. 12, 13, 15) sowie den zugehörigen Nachkatalysator (8, 9) dient.

8. Gaserzeugungsanlage nach einem der Ansprüche 1 bis 7, dadurch gekennzeichnet, daß das aus den Prozeßkammern (1, 2) und der dritten Kammer (3) bestehende Kammersystem sowie die Zuführeinheit (24) in einen Isoliermantel (31) eingebettet sind, der auch einen Teil der Ventile (18, 21, 23) sowie der Verbindungsleitungen (33) zwischen den einzelnen Prozeßräumen aufnimmt und der seinerseits von einer Metallhülle (32) umgeben ist.

9. Gaserzeugungsanlage nach einem der Ansprüche 1 bis 8, dadurch gekennzeichnet, daß es sich bei den Trenneinheiten (10-15) jeweils um solche zur Separation von Wasserstoffgas aus Gasgemischen handelt und diese jeweils mit Trennmembranen (37) sowie Trennrohren (35) aus Palladium versehen sind.

10. Gaserzeugungsanlage nach einem der Ansprüche 1 bis 9, dadurch gekennzeichnet, daß die Ventile (16-23) als von einem zugeordneten Prozeßrechner (54) beaufschlagbare Magnetventile ausgebildet sind.

11. Gaserzeugungsanlage nach einem der Ansprüche 1 bis 10, dadurch gekennzeichnet, daß die Betriebszeiten der Prozeßkammern (1, 2) so gewählt sind, daß diese diskontinuierlich arbeiten.

12. Gaserzeugungsanlage nach Anspruch 11, dadurch gekennzeichnet, daß die Betriebszeiten der Prozeßkammern (1, 2) so synchronisiert sind, daß diese im angenäherten zeitlichen Gegentakt arbeiten.

13. Gaserzeugungsanlage nach Anspruch 12, dadurch gekennzeichnet, daß die Synchronisation so ausgelegt ist, daß sich die Betriebszeiten der beiden Kammern teilweise zeitlich überlappen.

14. Gaserzeugungsanlage nach einem der Ansprüche 1 bis 13, dadurch gekennzeichnet, daß mehrere Gaserzeugungsanlagen zu einem modulförmigen Gaserzeugungssystem zusammengefaßt sind.

## Claims

1. A gas producing installation, particularly for orbital stations and satellites, wherein gases are produced on the basis of the chemical reaction and/or catalytic decomposition of a preferably liquid energy carrier and the gas mixture thus produced is decomposed into its components by means of a separating device, characterised in that at least two process chambers (1, 2), each provided with at least one gas producer (4-7) and a separating unit (10-15) are combined by means of a third chamber (3) to form a controllable modular process unit.

2. A gas producing installation as claimed in Claim 1, characterised in that each of the process chambers (1, 2) additionally contains an after-catalyst (8, 9).

3. A gas producing installation as claimed in Claim 2, characterised in that each after-catalyst (8, 9) is preceded and followed by a separating unit (10, 11, 12, 13).

4. A gas producing installation as claimed in anyone of Claims 1 to 3, characterised in that at least one further separating unit (14, 15) is situated in the third chamber (3) serving as an intermediate collector.

5. A gas producing installation as claimed in any one of Claims 1 to 4, characterised in that the process chambers (1, 2), as well as the third chamber (3), are connected, through controllable valves (17-21), to storage tanks (51, 52) to receive the individual gas components.

6. A gas producing installation as claimed in anyone of Claims 1 to 5, characterised in that the gas producers (4-7) associated with the process chambers (1, 2) can be acted upon by the energy carrier through a common feed unit (24).

7. A gas producing installation as claimed in anyone of Claims 1 to 6, characterised in that each of the process chambers (1, 2) comprises a flange (25, 26) which carries the gas producers (4-7) as well as some of the valves (17, 19, 20, 22) and which also serves at the same time as a support for the separating device (10, 11, 14 or 12, 13, 15) and the associated after-catalyst (8, 9).

8. A gas producing installation as claimed in anyone of Claims 1 to 7, characterised in that the chamber system consisting of the process chambers (1, 2) and the third chamber (3), as well as the feed unit (24), are embedded in an insulating jacket (31) which also receives some of the valves (18, 21, 23) and the connecting conduits (33) between the individual process regions and which in turn is surrounded by a metal casing (32).

9. A gas producing installation as claimed in anyone of Claims 1 to 8, characterised in that each of the separating units (10-15) is one for the separation of hydrogen gas out of gas mixtures and each of them is provided with separating membranes (37) and separating tubes (35) of palladium.

10. A gas producing installation as claimed in anyone of Claims 1 to 9, characterised in that the valves (16-23) are constructed in the form of solenoid valves which can be acted upon by an associated process control computer (54).

11. A gas producing installation as claimed in anyone of Claims 1 to 10, characterised in that the operating times of the process chambers (1, 2) are selected so that these work intermittently.

12. A gas producing installation as claimed in Claim 11, characterised in that the operating times of the process chambers (1, 2) are synchronized so that work substantially alternately in time.

13. A gas producing installation as claimed in Claim 12, characterised in that the synchronization is planned so that the operating times of the two chambers partially overlap in time.

14. A gas producing installation as claimed in anyone of Claims 1 to 13, characterised in that a plurality of gas producing plants are combined to form a modular gas producing system.

## Revendications

1. Installation de production de gaz, notamment pour des stations orbitales et des satellites, installation dans laquelle, sur la base de réactions chimiques et/ou de décompositions catalytiques d'un énergol, de préférence liquide, sont produits des gaz, et le mélange de gaz ainsi produit est décomposé en ses composants au moyen d'un dispositif de séparation, installation caractérisée en ce qu'au moins deux chambres de processus (1, 2) munies chacune au moins d'un générateur de gaz (4 à 7) et d'une unité de séparation (10 à 15) sont rassemblées par l'intermédiaire d'une troisième chambre (3), pour constituer une unité de processus modulaire susceptible d'être commandée.

2. Installation de production de gaz selon la revendication 1, caractérisée en ce que chacune des chambres de processus (1, 2) comprend, en outre, un recatalyseur (8, 9).

3. Installation de production de gaz selon la revendication 2, caractérisée en ce que, en avant et à la suite de chaque recatalyseur (8, 9) est branchée une unité de séparation (10, 11, 12, 13).

4. Installation de production de gaz selon une des revendications 1 à 3, caractérisée en ce que, dans la troisième chambre (3), jouant le rôle de collecteur intermédiaire, est disposée au moins une autre unité de séparation (14, 15).

5. Installation de production de gaz selon une des revendications 1 à 4, caractérisée en ce que les chambres de processus (1, 2) ainsi que la troisième chambre (3) sont reliées, par l'intermédiaire de soupapes (17 à 21) susceptibles d'être commandées, à des réservoirs collecteurs (51, 52) destinés à recevoir les différents composants des gaz.

6. Installation de production de gaz selon une des revendications 1 à 5, caractérisée en ce que les générateurs de gaz (4 à 7) associés aux chambres de processus (1, 2) sont susceptibles d'être alimentés avec l'énergol par l'intermédiaire d'une unité d'alimentation commune (24).

7. Installation de production de gaz selon une des revendications 1 à 6, caractérisée en ce que les chambres de processus (1, 2) comportent chacune une bride (25, 26) qui reçoit les générateurs de gaz (4 à 7) ainsi qu'une partie des soupapes (17, 19, 20, 22) et qui joue en même temps le rôle de support pour le dispositif de séparation (10, 11, 14 ou bien 12, 13, 15) ainsi que pour le recatalyseur associé (8, 9).

8. Installation de production de gaz selon une des revendications 1 à 7, caractérisée en ce que le système de chambres constitué par les chambres de processus (1, 2) et la première chambre (3), ainsi que l'unité d'alimentation (24) sont enrobées dans une enveloppe isolante (31), qui reçoit aussi une partie des soupapes (18, 21, 23) ainsi que des canalisations de liaison (33) entre les différentes chambres de processus, et qui, de son côté, est entourée par une enveloppe métallique (32).

9. Installation de production de gaz selon une des revendications 1 à 8, caractérisée en ce que, dans le cas des unités de séparation (10 à 15), il s'agit respectivement d'unités pour la séparation de l'hydrogène à partir de mélanges gazeux, et que ces unités sont respectivement munies de membranes de séparation (37) ainsi que de tubes de séparation (35) en palladium.

10. Installation de production de gaz selon une des revendications 1 à 9, caractérisée en ce que les soupapes (16 à 23) revêtent la forme de soupapes électromagnétiques susceptibles d'être commandées par un processeur (54) associé à l'installation.

11. Installation de production de gaz selon une des revendications 1 à 10, caractérisée en ce que les temps de fonctionnement des chambres de processus (1, 2) sont choisis de façon que ces chambres fonctionnent de façon discontinue.

12. Installation de production de gaz selon la revendication 11, caractérisée en ce que les temps de fonctionnement des chambres de processus (1, 2) sont synchronisés de façon que ces chambres fonctionnent de façon approximativement symétrique dans le temps.

13. Installation de production de gaz selon la revendication 12, caractérisée en ce que la synchronisation est prévue de façon que les temps de fonctionnement des deux chambres se chevauchent partiellement dans le temps.

14. Installation de production de gaz selon une des revendications 1 à 13, caractérisée en ce que plusieurs installations de production de gaz sont rassemblées pour constituer un système de production de gaz de forme modulaire.

Fig. 1

Fig. 2

0 155 994

Fig. 3

Fig. 4

# Fig. 5

Fig. 6

Fig. 7

55